# EUROPÄISCHE PATENTSCHRIFT

(11) **EP 3 477 890 B1**
(45) Veröffentlichungstag und Bekanntmachung des Hinweises auf die Patenterteilung: **01.07.2020**
(21) Anmeldenummer: 17198774.6
(22) Anmeldetag: 27.10.2017
(51) Int. Cl.: H04L 9/32, H04L 29/06, H04W 8/08, H04W 12/06, H04W 12/08

(54) **VERFAHREN ZUM AUFBAU UND BETRIEB EINES DEDIZIERTEN NETZWERKS IN EINEM MOBILFUNKNETZWERK UND INTER-OPERATOR BLOCKCHAIN NETZWERK**
METHOD FOR SETTING UP AND OPERATING A DEDICATED NETWORK IN A MOBILE PHONE NETWORK AND INTER-OPERATOR BLOCKCHAIN NETWORK
PROCÉDÉ D'ÉTABLISSEMENT ET D'EXPLOITATION D'UN RÉSEAU DÉDIÉ DANS UN RÉSEAU DE TÉLÉPHONIE MOBILE ET INTER-OPÉRATEUR DU RÉSEAU DE CHAÎNES DE BLOCS

(43) Veröffentlichungstag der Anmeldung: 01.05.2019
(73) Patentinhaber: Deutsche Telekom AG, 53113 Bonn (DE)
(72) Erfinder: HEIDER-AVIET, Andreas, 13187 Berlin (DE)
(74) Vertreter: Vossius & Partner Patentanwälte Rechtsanwälte mbB

(56) Entgegenhaltungen:
- US-A1- 2016 294 783
- JOVER ROGER PIQUERAS ET AL: "dHSS - distributed Peer-to-Peer implementation of the LTE HSS based on the bitcoin/namecoin architecture", 2016 IEEE INTERNATIONAL CONFERENCE ON COMMUNICATIONS WORKSHOPS (ICC), IEEE, 23. Mai 2016 (2016-05-23), Seiten 354-359, XP032919891, DOI: 10.1109/ICCW.2016.7503813 [gefunden am 2016-07-05]
- Mukesh Thakur: "Authentication, Authorization and Accounting with Ethereum Blockchain", , 13. September 2017 (2017-09-13), XP055465925, Gefunden im Internet: URL:https://helda.helsinki.fi/bitstream/ha ndle/10138/228842/aaa-ethereum-blockchain. pdf?sequence=2 [gefunden am 2018-04-10]

## Beschreibung

Die vorliegende Erfindung betrifft das Gebiet der Telekommunikation. Insbesondere betrifft die Erfindung den Betrieb und die Verwaltung von Mobilfunknetzen.

Für bestimmte Anwendungen sind in Mobilfunknetzen des Standes der Technik die Latenzzeiten zu hoch. Anwendungen, die von hoher Relevanz für zukünftige Telekommunikation-Szenarien sind, betreffen das Internet of Things (IOT) und verwandte Anwendungen. Eine besonders wichtige Voraussetzung für IOT und andere Anwendungen, ist eine schnelle und einfache Autorisierung und Authentifizierung (AAA). Ferner sind der Aufbau von dedizierten IOT-Netzen und eine Integration in die Mobilfunk-Netzinfrastruktur von Relevanz.

Insbesondere benötigen IOT Geräte und Anwendungen schnelle, sichere und robuste Netzwerkverbindungen. Ein einzelner Mobile Network Operator (MNO) kann solche Anforderungen für sich in dem von ihm betriebenen Mobilfunknetz erfüllen. Probleme entstehen jedoch, wenn für die IOT Kommunikation auf das Netz eines anderen MNO zurückgegriffen werden muss. Für die reibungslose Verwendung des IOT ist daher ein nationales und/oder internationales Netzwerk mit geringer Latenz notwendig.

In der Nicht-Patentliteratur: "THE BLOCKCHAIN PHENOMENON, " Juri Mattila, BRIE Working Paper 2016-1, verfügbar unter http://www.brie.berkeley.edu/wpcontent/uploads/2015/02/Juri-Mattila-.pdf (Stand August 2017), sind die Prinzipen der Blockchain Technologie erläutert, auf die in dieser Beschreibung mehrfach verwiesen wird, die aber auch ohne die genannte Quelle dem Fachmann als bekannt gelten.

"dHSS - distributed Peer-to-Peer implementation of the LTE HSS based on the bitcoin/namecoin architecture" R.P. Jover et al., 2016 IEEE International Conference on Communications Workshops (ICC), July 2016, DOI: 10.1109/ICCW.2016.7503813; betrifft eine verteilte und sichere Peer-to-Peer Implementierung eines HSS (home subscriber server). Basierend auf einem Bitcoin/Namecoin Gerüst schlägt diese Implementierung eine robuste public-key Infrastruktur vor und wendet sich von dem bisherigen symmetric key Verfahren eines Standard-HSS ab.

US 2016/294783 A1 betrifft ein dezentrales und verteiltes HSS, wobei erste Daten an eine mobile Vorrichtung gesendet werden, die eine erste Nonce-Zeichenkette darstellen und als Reaktion auf das Empfangen von zweiten Daten, die die erste Nonce-Zeichenkette und eine zweite Nonce-Zeichenkette darstellen, wird ein Kommunikationskanal mit der mobilen Vorrichtung als Funktion der ersten Nonce-Zeichenkette aufgebaut.

"Authentication, Authorization and Accounting with Ethereum Blockchain" Mukesh Thakur, URI: URN:NBN:fi:hulib-201711145693 http://hdl.handle.net/10138/228842 betrifft ein Verfahren welches es Nutzern erlaubt Cloud-Services zu nutzen und mit einem einzelnen Gerät AAA (Authentication, Authorization and Accounting) durchzuführen, ohne dabei private Nutzerdaten zu teilen.

Ferner werden in dieser Beschreibung Begriffe verwendet, die sich auf Ausführungsformen im Mobilfunk beziehen. Diese sind dem Fachmann bekannt und lassen sich den öffentlichen Dokumentationen zu den jeweiligen Mobilfunkstandards, beispielsweise unter http://www.3gpp.org/specifications/specifications und https://5g-ppp.eu/white-papers/ oder https://5g-ppp.eu/wp-content/uploads/2017/07/5G-PPP-5G-Architecture-White-Paper-2-Summer-2017_For-Public-Consultation.pdf, entnehmen.

Es ist eine Aufgabe der Erfindung, eine verbesserte Verwaltung von Mobilfunknetzwerken zu ermöglichen. Diese Aufgabe wird mit dem Gegenstand der unabhängigen Patentansprüche gelöst. Die abhängigen Patentansprüche beschreiben weitere Aspekte der Erfindung.

Grundidee der Erfindung ist die Bereitstellung eines Inter-Operator-Blockchain-Netzwerks (IOBN) zum Aufbau und zur Verwaltung eines dedizierten Netzwerks. Das IOBN ist so konfiguriert, dass jeder am IOBN teilnehmende Node (IOBN-Node) über eine lokale Datenbank mit SIM-Karteninformationen verfügt, daher muss für AAA nicht mehr auf eine zentrale Datenbank eines jeden MNOs zugegriffen werden, um Informationen über eine SIM-Karte zu bekommen. Die AAA im Mobilfunknetzwerk und insbesondere die AAA für dedizierte Netzwerke, erfolgt im IOBN am nächstgelegenen IOBN-Node, wodurch die Weiterleitungszeiten erheblich verkürzt werden und die Verwaltung vereinfacht wird.

Das IOBN selbst ist als Bestandteil von oder als eigenständiges Netzwerk neben dem Mobilfunknetz aufgebaut. Das IOBN wird gebildet von mindestens zwei IOBN-Nodes. Die IOBN-Nodes können jeweils in verschiedenen Netzwerkarchitekturen miteinander verknüpft sein. Bevorzugt ist dabei eine möglichst direkte (peer-to-peer) Verbindung zwischen den einzelnen IOBN-Nodes. Jeder IOBN-Node ist konfiguriert, um an einem Blockchain-Verfahren teilzunehmen. Insbesondere ist jeder IOBN-Node konfiguriert, sich mit anderen IOBN-Nodes über ein nächstes Datenpaket, das in die Blockchain aufgenommen werden soll, auszutauschen. Ferner verfügt jeder IOBN-Node über eine Konsenseinrichtung, die es erlaubt, mit anderen IOBN-Nodes einen Konsens über das nächste Datenpaket, das in die Blockchain aufgenommen wird, zu finden. Weiter verfügt jeder IOBN-Node über eine Speichereinrichtung, die es erlaubt, die Blockchain oder zumindest einige Hashwerte der Blockchain, zu speichern. Die Blockchain dient dabei bevorzugt zur Speicherung von Nutzerinformationen in den Mobilfunknetzen.

Mit Hilfe des IOBN ist ein schneller Zugriff auf Informationen, wie beispielsweise einen Status betreffend die Gültigkeit einer SIM-Karte, direkt an jedem IOBN-Node möglich. Durch die im IOBN verwendete Blockchain-Technologie liegt diese Information dezentral in jedem IOBN-Node, d.h. bei jedem MNO und/oder Relais sowie bevorzugt auch in jeder Edge-Location vor. Somit sind der Aufbau und die Verwaltung von sicheren, robusteren und schnelleren IOT-Netzen möglich. Auch eine verbesserte Machine-Type-Communication (MTC) wird erreicht.

Ein erster erfindungsgemäßer Aspekt betrifft ein Verfahren zum Aufbau und Betrieb eines dedizierten Netzwerks in einem Mobilfunknetzwerk basierend auf einem Inter-Operator Blockchain Netzwerk (IOBN), das mindestens zwei IOBN-Nodes, aufweist. Das Verfahren enthält folgende Schritte:
a) Speichern von SIM-Karteninformationen mindestens eines befähigten Gerätes und/oder weitere Daten welche zwischen MNOs geteilt werden in einem Distributed Ledger, wobei die SIM-Karteninformationen mindestens Identifikations- und/oder AAA-Informationen zur Berechtigung für das dedizierte Netzwerk beinhalten;
b) Replizieren, basierend auf Prinzipien der Blockchaintechnologie, der SIM-Karteninformationen auf den IOBN-Nodes, wobei die IOBN-Nodes in einer zentralen Infrastruktur mindestens eines Mobilfunktelekommunikationsanbieters (MNO) und/oder an vorbestimmten Edge-Locations des Mobilfunknetzwerks ausgeführt sind;
c) Identifizieren des befähigten Geräts basierend auf den SIM-Karteninformation durch einen IOBN-Node;
d) Bereitstellen von Infrastruktur-, Hardware-, Software- und Netzwerkressourcen die konfiguriert sind das dedizierte Netz mit geringer Latenz und hoher Bandbreite ab dem IBON-Node aufzubauen; und
e) Herstellen einer Datenverbindung in das dedizierte Netz ab einer Edge Location mit IOBN-Node.

In einem Aspekt der Erfindung wird die Datenverbindung in das dedizierte Netz ab der benutzen Edge-Location aufgebaut, wenn diese über einen IOBN-Node verfügt oder ab der nächstliegenden Edge-Location aufgebaut, die über einen IOBN-Node verfügt.

In einem Aspekt der Erfindung sind die Edge-Locations mindestens eines der folgenden: Edge Netzwerkknoten, und/oder Routing-, Switching-, oder Aggregationseinheiten, die in oder an Funkstationen des Mobilfunknetzwerks ausgeführt sind.

In einem Aspekt der Erfindung ist das IOBN konfiguriert, ein zugriffsbeschränktes dediziertes Netzwerk aufzubauen, und von dem mindestens einem MNO werden Routing- und Zugriffsbeschränkungen für das private dedizierte Netzwerk eingesetzt.

In einem Aspekt der Erfindung weist der mindestens eine IOBN-Node eine Einheit zur Ausführung von Blockchain-Funktionen auf und die Blockchain-Funktionen beinhalten mindestens: mindestens einen Konsensmechanismus, eine Datenbankspeicherung und eine P2P-Messaging-Funktion.

In einem Aspekt der Erfindung weist der mindestens eine IOBN-Node einen Verschlüsselungsmechanismus, einen Kryptographiemechanismus und/oder Schnittstellen auf, die für einen Zugriff durch Systeme des MNO konfiguriert sind.

In einem Aspekt der Erfindung ist das IOBN konfiguriert, Micropayments zwischen mehreren MNO, virtuellen MNOs, Dritten und/oder Endkunden zu ermöglichen.

In einem Aspekt der Erfindung sind Managementfunktionen des IOBN teilweise oder vollständig in einer Public Cloud ausgeführt und/oder Schnittstellen zum IOBN sind konfiguriert, einen öffentlichen Zugang bereitzustellen.

In einem Aspekt der Erfindung ist das IOBN konfiguriert, die Bandbreite des dedizierten Netzes dynamisch zu verwalten.

In einem Aspekt der Erfindung ist das IOBN konfiguriert, die Latenz des dedizierten Netzes dynamisch zu verwalten.

Ein weiterer erfindungsgemäßer Aspekt betrifft ein Inter-Operator Blockchain Netzwerk, IOBN, zum Aufbau und Betrieb eines dedizierten Netzwerk, mit mindestens zwei IOBN-Nodes, wobei das IOBN dazu konfiguriert ist, ein Verfahren nach einem voranstehenden Aspekte auszuführen.

Ein weiterer erfindungsgemäßer Aspekt ist das IOBN konfiguriert, eine Firmen-, Institutions-und/oder länderübergreifende global verteilte Datenbank, Datenbankhierarchie und/oder Graphenstruktur von verteilten Datenbanken bereitzustellen, die konfiguriert sind Geräte, Funktionen und/oder Infrastruktur eines Mobilfunknetzwerks zu verwalten und zu kontrollieren.

Ein weiterer erfindungsgemäßer Aspekt betrifft einen Inter-Operator Blockchain Netzwerk-Node, IOBN-Node, zum Aufbau und Betrieb eines dedizierten Netzwerks, wobei der IOBN-Node konfiguriert ist, mit mindestens einem weiteren IOBN-Node ein IOBN nach den voranstehenden Aspekt zu bilden.

In einer bevorzugten Ausführungsform sind die weiteren Daten zur Verwaltung des Mobilfunknetzwerks und von Mobilfunkservices geeignet.

In einer bevorzugten Ausführungsform wird das IOBN von dedizierten Netzwerkressourcen unterstützt, bzw. die Netzwerkressourcen werden durch das IOBN gemanagt. Dies bedeutet, dass der MNO seine Ressourcenplanung zum Sicherstellen der notwendigen Bandbreite und/oder Latenz dynamisch nach den jeweils notwendigen Anforderungen richten kann. Wobei sich die Anforderungen an das Netzwerk aus der Anzahl der aktuell verbundenen Geräten, der Anzahl an maximal möglichen Geräten und der statistisch vorhergesagten Anzahl an verbundenen Geräten ergibt. Alternativ oder ergänzend kann die Vorhersage der Anzahl an verbundenen Geräten über Machine-Learning bestimmt werden. Vorzugsweise findet das Machine-Learning im IOBN statt.

Ebenso kann durch die Verwendung von Schwellwerten bei einer Überwachung von AAA-Anfragen im IOBN automatisch das Hinzufügen weiterer Ressourcen veranlasst werden. Als Ressourcen werden hier alle Netzwerkelemente bezeichnet, die benötigt werden, um eine Verbindung im dedizierten Netzwerk mit vorbestimmten Eigenschaften, vorzugsweise einer vorbestimmten Bandbreite und/oder Latenz, zu gewährleisten. Dabei können die Ressourcen auch softwarebasiert bzw. virtuell bereitgestellt werden, beispielsweise als Software Defined Networks (SDN), Virtual Machines (VM), Virtual Network Services (VNS), oder Virtual Network Function (VNF).

In dieser Beschreibung beinhaltet der Begriff Edge-Location mindestens ein Element aus der nachfolgenden Liste, wobei die Liste funktionelle Elemente aus mehreren Mobilfunkstandards und allgemeine Elemente, welche nicht nur Mobilfunkanwendungen betreffen, enthält.

Liste der Edge-Locations:
Universal Terrestrial Radio Access Network (UTRAN),
Evolved UMTS Terrestrial Radio Access (E-UTRA),
GSM Edge Radio Access Network (GERAN),
Baseband Unit (BBU),
Base Station (sub) System (BSS),
Base Station Receiver (BTS),
Base Station controller (BSC),
Radio Network Controller (RNC),
Evolved Node B (eNB), eLTE eNBs, Next Gen Node Basestation (gNB),
Network switching subsystem (NSS),
Home Subscriber Server (HSS),
Home Location Register (HLR),
Visitor Location Register (VLR),
Equipment Identity Register (EIR),
Authentication Center (AUC),
Access Network Discovery and Selection Function (ANDSF),
Serving GPRS Support Node (SGSN),
Gateway GPRS Support Node (GGSN),
Serving Gateway (SGW),
Packet Data Network Gateway (PGW),
Evolved Packet Data Gateway (ePDG),
Mobility Management Entity (MME),
Mobile Switching Center (MSC),
Mobile Switching Center Server (MSCS, MSS),
Media Gateway (MGW),
Gateway MSC (GMSC),
IP Multimedia Subsystem / IP Multimedia Core Network Subsystem (IMS),
Policy and Charging Rules Function (PCRF),
Service Policy Decision Function (SPDF),
Resource Admission Control Subsystem (RACS),
Call State Control Function (CSCF),
Packet-Transport-Network (PTN) -Controller,
softwaredefinierter PTN (SPTN)-Controller,
Software Defined Network (SDN) Controller/Router/Switches,
Network Function Virtualization (NFV) Entity,
NarrowBand-IoT Gateway,
LoRa Gateway,
Digital Subscriber Line Access Multiplexer (DSLAM),
Multi Service Access Node (MSAN),
Router,
Wireless Access Point,
Closed Subscriber Group (CSG) Management,
User Plane Function (UPF),
Authentication Server Function (AUSF),
Access and Management Mobility Function (AMF),
Unified Data Function (UDM),
Session Management Function (SMF),
Policy Control Function (PCF),
Universal Access Gateway (UAG),
Layer3 Radio Resource Control (RRC) Funktionen,
Layer 2 Funktionen wie Service Data Adaptation Protocol (SDAP),
Packet Data Convergence Protocol (PDCP),
Medium Access Control (MAC)

Mit anderen Worten, als Edge Location wird jede Komponente eines Mobilfunknetzwerks bezeichnet, die eine oder mehrere Edge Funktionalitäten implementiert hat.

Kern der Erfindung ist ein Distributed Ledger, d.h. eine verteilte Datenbank, in der befähigte SIM-Karten aller MNOs gespeichert sind. Ferner können auch Smart Contracts gespeichert sein oder es können Smart Contracts zusammen mit den SIM-Karteninformationen gespeichert werden.

Den befähigten SIM-Karten wird der direkte Zugriff auf dedizierte Netzwerkkomponenten, z.B. 4G/5G-slices erlaubt. Die IOBN-Nodes, die am Blockchain-Prozess teilnehmen, sind nicht nur bei den einzelnen MNOs zentral, sondern auch an weiteren vorgeschalteten Komponenten, vorzugsweise an Edge Locations, in der Mobilfunkinfrastruktur und vorzugsweise auch in jedem MEC Server der MNOs ausgeführt.

Daher ist die AAA der SIM-Karten auch dezentral im Netz möglich, was einen schnellen, robusten und sicheren Netzzugriff für alle SIM-Karten-basierten IOT-Geräten, ermöglicht.

In einer weiteren Ausführungsform der Erfindung ist das IOBN konfiguriert, um für weitere Verwaltungsfunktionen sowie Anwendungen genutzt zu werden. Dafür werden bevorzugt Smart Contracts genutzt. Diese ermöglichen es, eine Programmierschnittstelle im IOBN zur Verfügung zu stellen, und ausführbaren Code im IOBN zu verteilen.

Die Erfindung sieht ein anbieterübergreifendes nationales und/oder internationales dediziertes Netz für IOT-Geräte vor. Die Geräte sind im IOBN schnell und eindeutig identifizierbar, dadurch können entsprechende Netzwerkressourcen für das dedizierte Netz bereitgestellt werden. Darüber hinaus ist die Sicherheit dieser Netze verbessert, da diese nur von registrierten Geräten benutzt werden können.

Dem Fachmann ist erkenntlich, dass sich das erfindungsbegründende Prinzip auch auf nicht-SIM-Karten-basierte Geräte und Netzwerke oder auf nicht-Mobilfunknetze anwenden lässt. Voraussetzung ist, dass das Gerät sich eindeutig und sicher identifizieren lässt, vorzugsweise durch ein Zertifikat, eine SIM-Karteninformation, oder eine Hardwarekomponente; das Gerät über technische Kommunikationsverbindungen verfügt, vorzugweise WLAN und/oder Funk und ein Netzinfrastrukturanbieter entsprechende äquivalente Implementierungen des IOBN vornehmen, vorzugsweise eine AAA mit IOBN-Nodes und ein Zuweisen dedizierter Netzwerkressourcen.

In dieser Beschreibung werden jedoch nur solche Ausführungsformen beschrieben, die Anwendungen im SIM-Karten-basierten Mobilfunk betreffen, ohne dass dadurch der Schutzbereich eingeschränkt wird.

Auch der Begriff SIM-Karte bzw. SIM-Karteninformation wird neben seiner eigentlichen Bedeutung auch synonym für eine eindeutige Identifizierungsmöglichkeit eines Netzwerkteilnehmers verwendet. Er umfasst insbesondere auch IMEI, IMSI, eSIM oder andere eindeutige Identifizierungsmöglichkeiten wie Zertifikate oder Kryptoschlüssel.

### Kurze Beschreibung der Figuren

- Fig. 1: zeigt eine schematische Darstellung eines IOBN Systems nach einer Ausführungsform der Erfindung eingebettet in eine Mobilfunkinfrastruktur;
- Fig. 2a: zeigt eine vereinfachte schematische Darstellung der Kommunikationswege zur Benutzung eines IOBN Systems nach einer Ausführungsform der Erfindung während einer Provisionierung; und
- Fig. 2b: zeigt eine vereinfachte schematische Darstellung der Kommunikationswege zur Benutzung eines IOBN Systems nach einer Ausführungsform der Erfindung während der Benutzung.

### Detaillierte Beschreibung der Figuren

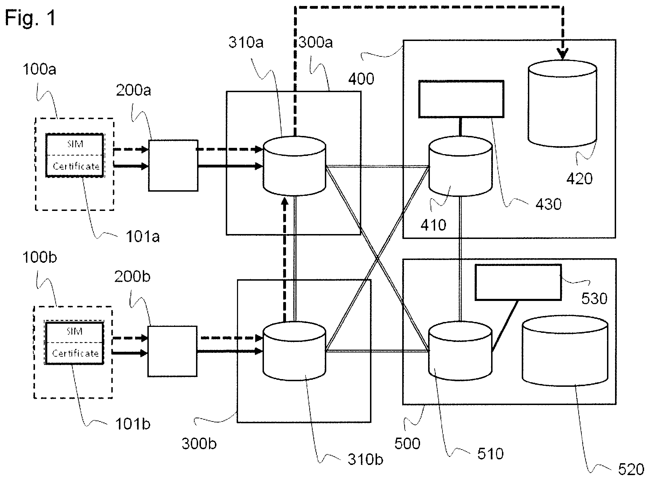

Fig. 1 zeigt eine schematische Darstellung eines IOBN Systems nach einer Ausführungsform der Erfindung, eingebettet in eine Mobilfunkinfrastruktur. Die befähigten Geräte 100a, 100b benutzen jeweils über die Basisstationen 200a, 200b die Infrastruktur der Mobilfunknetzbetreiber 300a, 300b. Einige Infrastrukturelemente 300a, 300b, 200a, 200b gibt es - je nach MNO und Netzwerkarchitektur - normalerweise an mehreren Standorten im Mobilfunknetzwerk. Das erfindungsgemäße IOBN Netz ist zwischen den IOBN Knoten als doppelt gezogene Line gezeigt. Gemäß den Aspekten der Erfindung werden SIM-Karteninformation und/oder weitere Daten 101a, 101b von dem jeweiligen befähigten Gerät 100a, 100b abgerufen und/oder gesendet.

Die AAA nach dem Stand der Technik ist mit gestrichelten Pfeilen dargestellt. Sowohl für die AAA mit einer SIM-Karte im eigenen Netz des MNOs, d.h. der SIM-Karte 100a, als auch für eine SIM-Karte im Netz eines anderen MNO 100b. Die AAA im IOBN hingegen ist als durchgezogener Pfeil dargestellt.

In einem System nach dem Stand der Technik muss ein Gerät, welches eine SIM-Karte benutzt 100a, 100b im jeweiligen Mobilfunknetz eingebucht sein und mindestens einmalig über eine zentrale Datenbank 420, 520 oder eine vorgelagertes Element des jeweiligen MNO der SIM-Karte authentifiziert und autorisiert werden. Zur AAA einer SIM-Karte eines MNO, welche in das Netz eines anderen MNO eingebucht ist, muss die Abfrage über die Infrastruktur der involvierten anderen MNOs 300a und 300b geleitet werden, was eine Erhöhung der Latenz und Komplexität bedeutet. Die Details und Netzverbindungen innerhalb der Infrastruktur der Mobilfunknetzbetreiber 300a, 300b, 400, 500 sind nicht dargestellt.

Im erfindungsgemäßen IOBN hingegen erfolgt die AAA bereits an der ersten Edge-Location die sich im IOBN befindet, also einen IOBN-Node hat, d.h. mindestens in 300a, 300b, möglicherweise auch schon an der nächstgelegenen Basisstation 200a, 200b, wobei letzterer Fall nicht eingezeichnet ist. Die Latenz und der Verwaltungsaufwand sind mit dem erfindungsgemäßen IOBN deutlich verkürzt.

Da nach dem Stand der Technik nicht alle SIM-Karteninformationen aller MNOs automatisch an allen Edge Locations vorgehalten werden, ist beim Wechsel der Funkzelle ggf. eine neue AAA notwendig. Auch diese erneute AAA kann im IOBN als Abfrage an weiteren Knoten erfolgen.

Erfindungsgemäß sind IOBN-Nodes 310a, 310b, 410, 510 an verschiedenen bzw. allen notwendigen Stellen in der Mobilfunkinfrastruktur ausgeführt. Die befähigten Geräte identifizieren sich direkt am nächstliegenden IOBN-Node und werden dort direkt mit dem dedizierten Netz verbunden. Alternativ oder ergänzend wird der Zugang zu angeforderten Funktionen direkt ab der Edge-Location mit IOBN-Node ermöglicht.

Ferner verfügt das IOBN Netzwerk über ein IOBN Management System 430, 530, welches vorzugsweise in der zentralen MNO Infrastruktur angesiedelt ist um mit den herkömmlichen MNO-Systemen zu interagieren. Weiter ist das IOBN Management System vorzugsweise für die Verwaltung der IOBN-Daten, d.h. das Hinzufügen, Ändern und Entfernen der SIM-Karteninformationen zuständig. Alternativ oder ergänzend ist das IOBN Management System konfiguriert erweiterte Verwaltungsfunktionen wie das kontrollierte sichere Integrieren neuer IOBN-Nodes zu ermöglichen.

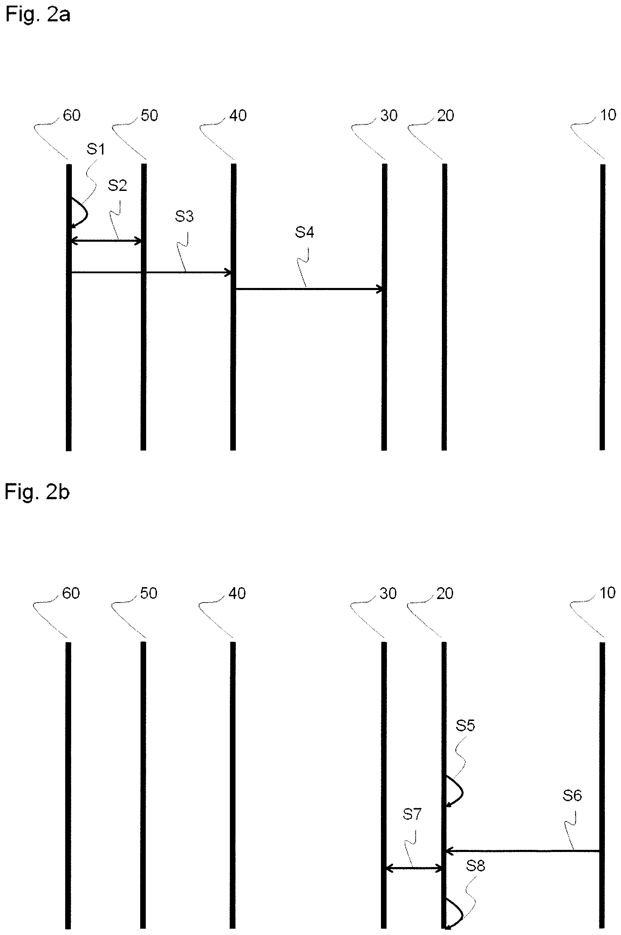

Fig. 2a und 2b zeigen eine vereinfachte schematische Darstellung der Kommunikationswege zur Benutzung eines IOBN Systems nach einer Ausführungsform der Erfindung während einer Provisionierung, Fig 2a, und während der Benutzung, Fig. 2b. Es sind verschiedene Elemente des IOBN dargestellt: Ein IOT Gerät 10, eine Edge-Location 20, ein erster IOBN-Node 30, ein zweiter IOBN Node 40 nahe der MNO Infrastruktur 50 und ein IOBN Management 60.

In einem Schritt S1 wird eine SIM-Karte für das IOBN von einem MNO aktiviert. Vorzugsweise wird dieser Schritt ausgeführt, nachdem ein Auftrag für eine Funktion, wie beispielsweise dem Zugang zu einem dedizierten Netz manuell oder digital erteilt und verifiziert wurde.

In einem Schritt S2 werden die SIM- und Kundendaten aus IT-Systemen des MNO extrahiert: Die Daten beinhalten vorzugsweise vorbestimmte Berechtigungen (Subscriptions), Sicherheitsinformationen und Informationen zum Gerät selbst, vorzugsweise zu Typ, Einsatzzweck und Funktionsumfang im dedizierten Netz.

In einem Schritt S3 werden die SIM-Karteninformationen und/oder vorzugsweise ein dazugehöriger Smart Contract dem IOBN, d.h. dem Distributed Ledger, hinzugefügt. Mit anderen Worten die neuen SIM-Karteninformationen bilden einen sogenannten Anwärter, um beim Konsens in den nächsten Datenblock aufgenommen zu werden, welcher dann im IOBN auf jeden Knoten 30 repliziert wird.

In einem Schritt S4 wird basierend auf der die Blockchain-Technologie ein Konsens über die Aufnahme neuer Daten, d.h. des Anwärters und damit der Aufnahme des Geräts 10 in das IOBN, gebildet.
Sofern dieselben SIM-Karteninformationen noch nicht in der Blockchain existieren ergibt sich beim Konsens kein Widerspruch. Sollten sie hingegen bereits existieren, dieser Fall ist nicht dargestellt, und sich daher kein Konsens ergeben, handelt es sich wahrscheinlich um einen Betrugsversuch, dessen Ursprung nachgegangen werden muss und für den die Aufnahme ins IOBN verweigert wird.

In einem Schritt S5 werden, durch konstante Überwachung der maximal möglichen und der aktuell benutzten, sowie anhand von Statistik und Machine Learning vorhergesagten Netzwerkressourcen, dynamisch entsprechende Ressourcen für das dedizierte Netz bereitgestellt. Je nach Einsatzzweck des IOBN können dies auch lediglich Kontrollfunktionen über die Konsistenz sein.

In einem Schritt S6 fordert das Gerät 10 mit einer befähigten SIM-Karte einen Zugang zu von dem IOBN verwalteten Funktionen bei einer Edge-Location 20 an.

In einem Schritt S7 wird das Gerät 10 über einen, der Edge Location 20 nächstliegenden IOBN-Knoten authentifiziert und autorisiert. Alternativ oder Ergänzend wird überprüft ob das Gerät die angefragte Funktion benutzen darf.

In einem Schritt S8 bekommt das Gerät 10 basierend auf dem Ergebnis aus Schritt S7 Zugang zu dem angeforderten Funktionen.

In allen Ausführungsformen der Erfindung können die IOBN-Nodes über eigenständige Hardware und Software verfügen und/oder teilweise in bestehende Systeme integriert sein und/oder als Softwarekomponente ausgeformt sein.

In einer Ausführungsform der Erfindung werden für die Teilnahme eines befähigten Geräts an dem dedizierten Netz die SIM-Karteninformationen des Gerätes in einer verteilten IOBN-Datenbank gespeichert, die auch als Blockchain oder Distributed Ledger bezeichnet wird. Die Daten beinhalten mindestens Identifikations- und AAA-Informationen, die eine Berechtigung für bestimmte dedizierte Netze betreffen. Ferner kann die Blockchain auch Smart Contracts, d.h. ausführbaren Programmcode mit aufrufbaren APIs, enthalten.

Nach dem Blockchain-Prinzip werden die SIM-Karteninformationen zeitnah auf allen IOBN-Nodes repliziert, d.h. es wird ein Konsens unter den entscheidenden IOBN-Nodes über neu hinzuzufügende Daten herbeigeführt. Die Daten sind somit auf allen IOBN Nodes verfügbar.

Ferner können die einzelnen Blöcke gemäß dem Blockchain-Prinzip nicht mehr verändert werden. Eine Manipulation der einzelnen Blöcke würde gemäß dem Blockchain-Prinzip sofort auffallen. Die Hashwerte der verketteten Blöcke würden nicht mehr mit den Hashwerten der entsprechenden Blöcke der anderen IOBN-Nodes, welche eine Mehrheit bilden, übereinstimmen, somit fallen manipulierte Blöcke sofort auf.

Je verteilter die Blockchain ist, d.h., desto mehr IOBN-Nodes teilnehmen, desto manipulationssicherer ist das IOBN. Eine böswillige Manipulation aller Nodes ist aufwendig oder unmöglich.

In einer Ausführungsform der Erfindung ist das IOBN konfiguriert, die Integrität des Distributed Ledgers bevorzugt anhand der gleichen Hashwerte aller Nodes zu überwachen.

In einer Ausführungsform der Erfindung sind die befähigten Geräte, über deren SIM-Karteninformation, auf jedem IOBN-Node im Netz bekannt. Die beteiligten MNO stellen die notwendigen Infrastruktur-/Hardware-/Software-/Netzwerkressourcen bereit, um niedrige Latenzzeiten und hohe Bandbreiten für das dedizierte Netz zu ermöglichen. Für zugriffsbeschränkte dedizierte Netze werden von den MNOs entsprechend Routing und Zugriffsbeschränkungen eingesetzt.

Beim Datenverbindungsaufbau eines befähigten Gerätes wird dieses direkt an der benutzten bzw. nächstliegenden Edge-Location, die über einen IOBN-Node verfügt, identifiziert und die aufzubauende Datenverbindung in das dedizierte Netz geleitet. Das Bereitstellen der dedizierten Netzwerkressourcen, vorzugsweise eine 4G/5G-slice, an den Basisstationen und Relais wird in einer Ausführungsform der Erfindung durch das IOBN-gesteuert.

In einer Ausführungsform der Erfindung ist ein zusammenhängendes IOBN in mehreren Netzen mehrerer MNOs ausgebildet. Somit ist ein sicheres dediziertes Netzwerk mit hoher Mobilfunkabdeckung möglich, zu welchem prinzipiell jedes technisch befähigte und administrativ befähigte Gerät Zugang hat. Teilnehmende Geräte sind als vertrauenswürdig eingestuft und Services, die auf der AAA im IOBN basieren, ermöglichen spezielle Anwendungen, vorzugsweise im Low-Latency-Bereich.

Durch das Blockchain-Prinzip hat das IOBN auf allen Nodes immer dieselben SIM-Karteninformationen vorrätig und jede Änderung muss erst per Konsens validiert werden. Wobei in einigen Ausführungsformen nur zentrale Operator-IOBN-Nodes beim Konsens mitentscheiden müssen, d.h. nicht jeder externe IOBN Node an dem Konsens beteiligt sein muss.

In einer Ausführungsform der Erfindung kann jeder MNO seine eigenen SIM-Karteninformationen im IOBN managen. Das Managen betrifft hier bevorzugt das Hinzufügen von SIM-Karteninformationen, das Ändern von Laufzeit und/oder Zusatzinformationen und das Deaktivieren von SIM-Karteninformationen. Erfindungsgemäß sind alle SIM-Karteninformationen nach dem nächsten Konsens für alle IOBN-Nodes sichtbar. Je nach eingesetzter Blockchaintechnologie ist das Ändern bzw. Löschen von Daten unterschiedlich implementiert, bevorzugt ist, dass ein neuerer äquivalenter Datensatz hinzugefügt wird, wodurch ein jeweils älterer Datensatz der SIM-Karteninformationen ungültig wird. Vorzugsweise ist der jeweilige Status über externe Smart-Contract-APIs abfragbar.

In einer Ausführungsform der Erfindung ist die AAA in die Mobilfunk-Infrastruktur integriert. Das IOBN ist konfiguriert, weitere darauf aufbauende Funktionen und Anwendungen, wie eine dedizierte Teilnahme an externen Netzwerken, permissioned Blockchains, oder eine Herausgabe von Zusatzinformationen, z.B. der Position des IOT-Geräts, zu ermöglichen. In dem IOBN sind befähigte IOT-Geräte mit IOBN-SIM-Karten als vertrauenswürdig eingestuft und daher die darauf aufbauenden Funktionen und Anwendungen sicher.

In einer Ausführungsform der Erfindung wird ein Zugang zu mindestens einem IOBN-Node und/oder zu einem damit verbundenen Service in einer Public Cloud angeboten, wobei der Zugang so konfiguriert ist, dass Dritte über das Internet auf Statusinformationen des IOBN zugreifen können. Alternativ oder ergänzend wird das Hinzufügen von Geräten zum IOBN bzw. Änderungen per Portal/API angeboten. Das Hinzufügen und Ändern erfolgt dann zeitnah mit dem nächsten Konsens.

In einer Ausführungsform der Erfindung ist das IOBN dazu konfiguriert, einen Roaming und/oder ein Providerwechsel zu ermöglichen, ohne zwangsweise auch dedizierte Netze/Ressourcen bereitzustellen. Das IOBN enthält in diesem Fall international providerübergreifende SIM-Karteninformationen.

In einer Ausführungsform der Erfindung ist das IOBN dazu konfiguriert, Micropayments, d.h. Bezahlung von Kleinstbeträgen einer realen oder virtuellen Währung, zwischen den MNO, Virtuellen MNOs, Dritten und/oder Kunden abzuwickeln.

In einer Ausführungsform der Erfindung ist das IOBN dazu konfiguriert, eine Verwaltung der dedizierten Netze durchzuführen und/oder mit der Ressourcenbereitstellung der MNOs zu interagieren, um dynamisch auf Anforderungen an Latenz und/oder Bandbreite reagieren zu können. Die Interaktion erfolgt vorzugsweise über Smart Contracts und/oder über IOBN-Verwaltungsschnittstellen, welche mit der SDN/VNF des Mobilfunknetzes interagieren. Durch die verteilte, einheitliche, ausfallsichere, konsistente und zeitnahe Datenreplikation werden effiziente "Low-Latency-on-demand" und/oder "Bandwith-on-demand" und/oder "Dedicated-network-on-demand" Strukturen ermöglicht.

In einer Ausführungsform der Erfindung enthalten die Smart Contracts vordefinierte Funktionen und/oder Schnittstellen. Weitere Ausführungsformen betreffen Aufruf, Abfrage und/oder Anpassung von Tarif, Status, Position, Besitzer, Eigentümer und/oder Nutzer, Verweise/Informationen zu dedizierten Netzen, Anwendungen, Teilnehmer/Inhaber der dedizierten Netze und/oder technische Informationen. In einigen Ausführungsformen wird der Zugriff auf die Smart Contracts durch ein IOBN-Management eingeschränkt. Mögliche Beschränkungen sind: bestimmte Nodes sind nur lesend und/oder nur der MNO der SIM-Karte darf Anpassungen an den SIM-Karteninformationen vornehmen.

In einer Ausführungsform der Erfindung enthält der IOBN-Node alle notwendigen Informationen zum Zugang und zum AAA des jeweiligen Mobilfunkstandards, und kann so diese Funktionalität anbieten. Somit muss nicht der gesamte Weg zur AAA bis in ein zentrales Register des jeweiligen MNO durchschritten werden, welcher insbesondere bei Roaming weit ist und mit einer hohen Latenz verbunden ist.

In einer Ausführungsform der Erfindung werden IOBN-Nodes alternativ oder ergänzend von nicht-MNOs bereitgestellt. So können Manipulationen zuverlässiger verhindert werden, da bei Konsensalgorithmen, die Teil des Blockchain-Prinzips sind, die Mehrheit der Teilnehmer über den Gesamtstatus des Systems entscheidet. Über 50%-Mehrheiten können den Konsens, z.B. beim Hinzufügen neuer Informationen zum IOBN, nach ihrem Willen beeinflussen. Konsortien aus MNOs werden durch unabhängige nicht-MNO-Nodes verhindert.

In einer Ausführungsform der Erfindung werden die dedizierten Netze bereits auf der Netzwerkebene von normalen Netzen getrennt, verschlüsselt und/oder geroutet, so dass die SIM-Karten, d.h. die IoT Geräte, aus dem normalen Netz und/oder von anderen Netzen aus nicht erreichbar sind. Dies ermöglicht zusätzliche Sicherheit, bis hin zu optimierten Anwendungen, welche Sicherheitsprobleme nicht oder nur bedingt selbst lösen müssen, da sie zwar über Mobilfunk, aber nur mit IOBN-aktivierten SIM-Karten und nur über ein abgeschottetes dediziertes Netz kommunizieren.

In einer Ausführungsform der Erfindung sind das IOBN und/oder mehrere IOBNs und/oder eine hierarchische Struktur von IOBNs länderübergreifend und/oder global verschaltet.

Mit anderen Worten stellt das erfindungsgemäße IOBN eine Firmen- und/oder Institutions-und/oder länderübergreifende global verteilte Datenbank, Hierarchie und/oder Graphenstruktur von verteilten Datenbanken dar. Erfindungsgemäß werden Netzteilnehmer und/oder IoT-Geräte einheitlich identifiziert und aufgrund der Identifizierung werden dedizierte Netze und Anwendungen aufgebaut.

In einer Ausführungsform haben Netzteilnehmer dynamische IP-Adressen des jeweiligen MNO. Alternativ oder ergänzend können diese IP Adressen mit dem IOBN und/oder IOBN-Hierarchien global adressiert werden und/oder dedizierte Netze für diese Teilnehmer bereitgestellt werden. Weiter kann eine Hierarchie von Netzwerken und/oder IOBN-Netzen vorzugsweise via SDN/VNF dynamisch erzeugt werden.

Die Verwendung eines IOBN ermöglicht eine sehr hohe Flexibilität in der Verwaltung der Netze und Netzteilnehmer, da Änderungen im Datenbestand sehr zeitnah in allen Netzwerkkomponenten bekannt sind. Dies betrifft auch die Konvergenz und Aggregation der Netzwerke, da sowohl der Verbindungstyp zwischen IOBN-Nodes also auch die Arten der per IOBN verwalteten Netzwerke keine Rolle spielen und verschiedene Ebenen hierarchischer IOBNs unterschiedliche Netzverbindungstechnologien verwenden und verwalten können.

In einer Ausführungsform wird eine gesamte globale Netzwerkstruktur, bevorzugt die Konvergenz und Aggregation der Netze, mit einem oder mehreren erfindungsgemäßen IOBNs verwaltet. Auf Grundlage der IOBNs wird ein einheitlicher und vertrauenswürdiger Datenbestand, d.h. Informationsstatus (engl. ,information state') bereitstellt. Bevorzugt betrifft der Datenbestand die IOBN Teilnehmer, aber auch die Netzwerkgeräte und deren Eigenschaften, deren Funktionen an sich, deren Services und/oder Anwendungen.

Das erfindungsgemäße IOBN kann auch nur für bestimmte Teilbereiche einer globalen Netzwerkstruktur Anwendung finden; etwa für dedizierte Netze zwischen bestimmten Ländern, Institutionen, Firmen, Verbindungstypen, Geräteklassen, Prioritäten und/oder Anwendungen.

Weitere Ausführungsformen betreffen IOBN in der bzw. für die 5G Serviceebene, die Management- und Orchestrierungsebene, die Kontrollebene und/oder Datenebene.

Das IOBN ist konfiguriert eine Netzwerkinfrastrukturressourcendatenbank im Netzwerkmanagement zu speichern. Alternativ oder ergänzend wird eine Tenant-Datenbank im Virtual Infrastructure (VI) Datenbank/Manager, eine Netzwerkslice-Datenbank im Inter-Slice Broker, eine Servicedatenbank, eine Applikationsdatenbank im Element Management, ein Network Function Repository, ein Business Function Repository, das Common Control & Enforcement und/oder das Multi-Domain Network Operating System im Sinne der 5G Architektur im IOBN verteilt gespeichert.

Vereinfacht gesagt, werden in der verteilten und verketteten Datenbank IOBN Teilnehmer, Infrastrukturelemente, virtuelle Infrastrukturelemente, Anwendungen, Services und/oder Funktionen aller Beteiligten übergreifend und einheitlich gespeichert. Ferner werden Funktionen realisiert, wodurch eine einfache, sichere und schnelle Verwaltung und Kontrolle ermöglicht wird, da alle Teilnehmer die gleichen Informationen und Zugänge haben.

Ein erfindungsgemäßes IOBN mit mehreren MNOs ist ebenfalls sicher, da man dem Gesamtsystem-IOBN vertrauen kann. Weiter sind IOBN basierte Systeme ausfallsicher und können höhere Service-Level Agreements als nicht-IOBN Systeme bieten, da die Daten im IOBN auf vielen physisch und institutionell getrennten Servern liegen, welche nur mit sehr geringer Wahrscheinlichkeit gleichzeitig ausfallen.

Weitere Ausführungsformen betreffen eine Anwendung des IOBN-Prinzips auf nicht-Mobilfunknetzwerke. So können an eine bestimmte Technologie gebundene, dedizierte, sichere und/oder zugriffsbeschränkte Netze aufgebaut und verwaltet werden. Insbesondere können vorzugsweise WLAN AccessPoints Teil eines IOBN-Netzes sein und/oder ein IOBN Subnetz darstellen.

Weitere Ausführungsformen betreffen die Verwendung eines IOBN, um allgemeine Daten MNO-übergreifend zu speichern und zu teilen. Das IOBN ist dabei so konfiguriert, dass Daten mit virtuellen MNOs, Institutionen und/oder anderen Firmen geteilt werden können. Die Daten beinhalten insbesondere eine oder mehrere gemeinsame Blacklists mit IP-Adressen, Domains, IMSI, IMEIs. Ferner ist ein Teilen von Hacker-, Firmen-, Viren- und Angriffsinformationen und/oder von anonymisierten Kundeninformationen möglich.

Weitere Ausführungsformen betreffen die Nutzung eines IOBN für die im 5G Standard geplanten User Equipment Identifiers. Dabei werden im IOBN bevorzugt: C-RNTI, Temporary C-RNTI, Multi C-RNTI, und/oder Xx-RNTI gespeichert.

Weitere Ausführungsformen betreffen die Nutzung eines IOBN für die im 5G Standard geplanten Network Identifier. Dabei werden im IOBN bevorzugt AMF Identifier (AMF ID), NR Cell Global Identifier (NCGI), gNB Identifier (gNB ID), Global gNB ID, Tracking Area identity (TAI), und/oder Single Network Slice Selection Assistance information (S-NSSAI) gespeichert.

Weitere Ausführungsformen betreffen die Nutzung des IOBN für die folgenden Elemente der 5G-Architektur und der darauf aufbauenden Systeme: Software- und Servicenetzwerkprovisionnierung, App-basierte Netzwerksoftwareinitiierung, Verknüpfung von Netzwerksegmenten, FCAPS Funktionalität, Netzwerkinformationsmanagement und Multi-Service Management Funktionen wie Slice-Service Mapper, Ressource-, Domain- und Serviceorchestrierung.

In einer weiteren Ausführungsform wird das IOBN benutzt, um die für den 5G-Standard geplante rekursive Aggregation und/oder "slice-cum-slice"- Aggregation und Kompositionen zu realisieren.

Weitere Ausführungsformen betreffen die Nutzung der 5G-Domänen. Dabei werden im IOBN bevorzugt Universal Integrated Circuit Card (UICC) mit Endkunden und sicherheitskritischen Informationen, Mobile Equipment Hardware (MEHW) USIM mit logischen Funktionalitäten und bereitgestellten Sicherheitsservices im IOBN gespeichert. So wird im IOBN ein Identity Management mit im USIM-alternativer AAA, basierend auf Zertifikaten und/oder Home Domain Funktionen mit Userddaten der Subscription Daten realisiert.

In einer weiteren Ausführungsform ist das IOBN konfiguriert, um 5G-Sicherheitskonzepte umzusetzen, bevorzugt werden die Sicherheitsschlüssel, Credentials und/oder "Trust Anchors" in einem oder mehreren IOBNs verteilt und verwaltet.

In einer weiteren Ausführungsform werden Multi-Domain und Multi-Operator Operationen, bevorzugt Katalogmanagement, Netzwerkserviceorchestrierung, Ressourcenorchestrierung und/oder Topologieabstraktionsaustausch in einem oder mehreren IOBNs verteilt und verwaltet.

Weitere Ausführungsformen betreffen Anwendungen im Zusammenhang mit dem Architekturframeworks Next-Generation Point of Presence (NG-POP), welches Teil des FP7 ICT European project ist, und Teil einer zukünftigen MNO Infrastruktur sein wird.

## Patentansprüche

1. Verfahren zum Aufbau und Betrieb eines dedizierten Netzwerks in einem Mobilfunknetzwerk basierend auf einem Inter-Operator Blockchain Netzwerk, IOBN, das mindestens vier IOBN-Nodes (310a, 310b, 410, 510) aufweist, mit folgenden Schritten:
a) Speichern von SIM-Karteninformationen mindestens eines befähigten Gerätes und weitere Daten, welche zwischen mindestens zwei Mobilfunktelekommunikationsanbietern, MNO, geteilt werden, in einem Distributed Ledger, wobei die SIM-Karteninformationen mindestens Identifikations- und AAA-Informationen zur Berechtigung für das dedizierte Netzwerk beinhalten;
b) Replizieren, basierend auf Prinzipien der Blockchaintechnologie, der weiteren Daten und SIM-Karteninformationen auf den IOBN-Nodes (310a, 310b, 410, 510), wobei bei jedem der MNOs jeweils mindestens einer der IOBN-Nodes (310a, 310b, 410,510) in einer zentralen Infrastruktur (400,500) des jeweiligen MNOs und an vorbestimmten Edge-Locations (300a, 300b) des Mobilfunknetzwerks des jeweiligen MNOs ausgeführt sind;
c) Identifizieren des befähigten Geräts basierend auf den SIM-Karteninformation durch einen der IOBN-Nodes (310a, 310b, 410, 510);
d) Bereitstellen von Infrastruktur-, Hardware-, Software- und Netzwerkressourcen, die konfiguriert sind, das dedizierte Netz mit geringer Latenz und hoher Bandbreite ab dem identifizierten IOBN-Node (310a, 310b, 410, 510) zu dem befähigten Gerät aufzubauen; und
e) Herstellen einer Datenverbindung in das dedizierte Netz ab einer der Edge-Locations (300a, 300b) mit dem identifizierten IOBN-Node (310a, 310b),
wobei die Datenverbindung in das dedizierte Netz ab der benutzen Edge- Location aufgebaut wird, wenn diese über einen IOBN-Node (310a, 310b) verfügt oder ab der nächstliegenden Edge-Location aufgebaut wird, die über einen IOBN- Node (310a, 310b) verfügt.

2. Verfahren nach Anspruch 1, wobei die Edge-Locations (300a, 300b) mindestens eines der folgenden sind: Edge Netzwerkknoten, und/oder Routing-, Switching-, oder Aggregationseinheiten, die in oder an Funkstationen des Mobilfunknetzwerks ausgeführt sind.

3. Verfahren nach Anspruch 1 oder 2, wobei das IOBN konfiguriert ist, ein zugriffsbeschränktes dediziertes Netzwerk aufzubauen, und von dem mindestens einen MNO (400, 500) Routing- und Zugriffsbeschränkungen für das private dedizierte Netzwerk eingesetzt werden.

4. Verfahren nach einem der vorstehenden Ansprüche, wobei der mindestens eine IOBN-Node (310a, 310b, 410, 510) eine Einheit zur Ausführung von Blockchain-Funktionen aufweist und die Blockchain-Funktionen mindestens beinhalten: mindestens einen Konsensmechanismus, eine Datenbankspeicherung und eine P2P-Messaging-Funktion.

5. Verfahren nach einem der vorstehenden Ansprüche, wobei der mindestens eine IOBN-Node (310a, 310b, 410, 510) einen Verschlüsselungsmechanismus, einen Kryptographiemechanismus und/oder Schnittstellen aufweist, die für einen Zugriff durch Systeme des MNO konfiguriert sind.

6. Verfahren nach einem der vorstehenden Ansprüche, wobei das IOBN konfiguriert ist, Micropayments zwischen mehreren MNOs (400, 500), virtuellen MNOs, Dritten und/oder Endkunden zu ermöglichen.

7. Verfahren nach einem der vorstehenden Ansprüche, wobei Managementfunktionen des IOBNs teilweise oder vollständig in einer Public Cloud ausgeführt sind und/oder Schnittstellen zum IOBN konfiguriert sind, einen öffentlichen Zugang bereitzustellen.

8. Verfahren nach einem der vorstehenden Ansprüche, wobei das IOBN konfiguriert ist, die Bandbreite des dedizierten Netzes dynamisch zu verwalten.

9. Verfahren nach einem der vorstehenden Ansprüche, wobei das IOBN konfiguriert ist, die Latenz des dedizierten Netzes dynamisch zu verwalten.

10. Inter-Operator Blockchain Netzwerk, IOBN, zum Aufbau und Betrieb eines dedizierten Netzwerks, mit mindestens vier IOBN-Nodes (310a, 310b, 410, 510), wobei das IOBN dazu konfiguriert ist, ein Verfahren nach einem der Ansprüche 1 bis 10 auszuführen.

11. IOBN nach Anspruch 10, wobei das IOBN konfiguriert ist, eine Firmen-, Institutions-und/oder länderübergreifende global verteilte Datenbank, Datenbankhierarchie und/oder Graphenstruktur von verteilten Datenbanken bereitzustellen, die konfiguriert sind, Geräte, Funktionen und/oder Infrastruktur eines Mobilfunknetzwerks zu verwalten und zu kontrollieren.

12. Inter-Operator Blockchain Netzwerk-Node, IOBN-Node (310a, 310b, 410, 510), zum Aufbau und Betrieb eines dedizierten Netzwerks, wobei der IOBN-Node (310a, 310b, 410, 510) konfiguriert ist, mit mindestens einem weiteren IOBN-Node (310a, 310b, 410, 510) ein IOBN nach Anspruch 10 oder 11 zu bilden.

## Claims

1. A method for setting up and operating a dedicated network in a mobile communications network based on an inter-operator blockchain network, IOBN, comprising at least four IOBN nodes (310a, 310b, 410, 510), the method comprising the following steps:
(a) storing SIM card information of at least one qualified device and further data which are shared by at least two mobile network operators, MNOs, in a distributed ledger, wherein the SIM card information includes at least identification information and AAA information for authorization to the dedicated network;
(b) replicating, based on principles of the blockchain technology, the further data and SIM card information on the IOBN nodes (310a, 310b, 410, 510), wherein in each of the MNOs at least one of the IOBN nodes (310a, 310b, 410, 510) is realized in a central infrastructure (400, 500) of the respective MNO and at predetermined edge locations (300a, 300b) of the mobile communications network of the respective MNO;
(c) identifying the qualified device based on the SIM card information by one of the IOBN nodes (310a, 310b, 410, 510);
(d) providing infrastructure, hardware, software and network resources which are configured to set up the dedicated network with low latency and high bandwidth starting from the identified IOBN node (310a, 310b, 410, 510) to the qualified device; and
(e) establishing a data connection to the dedicated network starting from one of the edge locations (300a, 330b) with the identified IOBN node (310a, 310b),
wherein the data connection to the dedicated network is set up starting from one of the used edge locations if the latter comprises an IOBN node (310a, 310b) or starting from the closest edge location which comprises an IOBN node (310a, 310b).

2. The method according to claim 1, wherein the edge locations (300a, 300b) are at least one of the following: edge network nodes, and/or routing, switching or aggregation units realized in or at mobile stations of the mobile communications network.

3. The method according to claim 1 or 2, wherein the IOBN is configured to set up an access-restricted dedicated network and wherein routing and access restrictions for the private dedicated network are used by the at least one MNO (400, 500).

4. The method according to any one of the preceding claims, wherein the at least one IOBN node (310a, 310b, 410, 510) comprises a unit for executing blockchain functions and the blockchain functions at least include: at least a consensus mechanism, a database storage and a P2P messaging function.

5. The method according to any one of the preceding claims, wherein the at least one IOBN node (310a, 310b, 410, 510) comprises an encryption mechanism, a cryptography mechanism and/or interfaces which are configured to be accessed by systems of the MNO.

6. The method according to any one of the preceding claims, wherein the IOBN is configured to allow micro payments between a plurality of MNOs (400, 500), virtual MNOs, third parties and/or final customers.

7. The method according to any one of the preceding claims, wherein management functions of the IOBN are realized partly or completely in a public cloud and/or interfaces to the IOBN are configured to provide a public access.

8. The method according to any one of the preceding claims, wherein the IOBN is configured to manage the bandwidth of the dedicated network dynamically.

9. The method according to any one of the preceding claims, wherein the IOBN is configured to manage the latency of the dedicated network dynamically.

10. An inter-operator blockchain network, IOBN, for setting up and operating a dedicated network comprising at least four IOBN nodes (310a, 310b, 410, 510), wherein the IOBN is configured to execute a method according to any one of claims 1 to 10.

11. The IOBN according to claim 10, wherein the IOBN is configured to provide a company, instruction and/or cross-country global distributed database, database hierarchy and/or graph structure of distributed databases, which are configured to manage and control devices, functions and/or infrastructure of a mobile communications network.

12. An inter-operator blockchain network node, IOBN node, (310a, 310b, 410, 510) for setting up and operating a dedicated network, wherein the IOBN node (310a, 310b, 410, 510) is configured to form, together with at least one further IOBN node (310a, 310b, 410, 510), an IOBN according to claim 10 or 11.

## Revendications

1. Procédé d'établissement et d'exploitation d'un réseau dédié dans un réseau de téléphonie mobile sur la base d'un réseau de chaînes de blocs inter-opérateurs IOBN, présentant au moins quatre nœuds IOBN (310a, 310b, 410, 510), comprenant les étapes suivantes :
a) mémorisation d'informations de carte SIM d'au moins un appareil habilité et d'autres données partagées entre au moins deux opérateurs de téléphonie mobile MNO, dans un registre distribué, les informations de carte SIM comprenant au moins des informations d'identification et des informations AAA pour l'habilitation au réseau dédié ;
b) reproduction, sur la base des principes de la technologie blockchain, des autres données et informations de carte SIM sur les nœuds IOBN (310a, 310b, 410, 510), où pour chaque MNO au moins un des nœuds IOBN (310a, 310b, 410, 510) est exécuté dans une infrastructure centrale (400, 500) du MNO respectif et à des emplacements périphériques définis (300a, 300b) du réseau de téléphonie mobile du MNO respectif ;
c) identification de l'appareil habilité sur la base des informations de carte SIM par un des nœuds IOBN (310a, 310b, 410, 510) ;
d) préparation de ressources infrastructurelles, matérielles, logicielles et de réseau, configurées pour établir le réseau dédié avec une faible latence et une largeur de bande élevée depuis le nœud IOBN (310a, 310b, 410, 510) identifié vers l'appareil habilité ; et
e) établissement d'une liaison de données dans le réseau dédié depuis un des emplacements périphériques (300a, 300b) avec le nœud IOBN (310a, 310b) identifié,
ladite liaison de données étant établie dans le réseau dédié depuis l'emplacement périphérique utilisé si celui-ci dispose d'un nœud IOBN (310a, 310b), ou depuis l'emplacement périphérique le plus proche, disposant d'un nœud IOBN (310a, 310b).

2. Procédé selon la revendication 1, où les emplacements périphériques (300a, 300b) sont au moins un des emplacements suivants : nœuds de réseau périphériques et/ou unités de routage, de commutation ou d'agrégation, réalisés dans ou sur des stations radio du réseau de téléphonie mobile.

3. Procédé selon la revendication 1 ou la revendication 2, où l'IOBN est configuré pour établir un réseau dédié à limitation d'accès, et où des limitations de routage et d'accès pour le réseau dédié privé sont mises en œuvre par ledit au moins un MNO (400, 500).

4. Procédé selon l'une des revendications précédentes, où ledit au moins un nœud IOBN (310a, 310b, 410, 510) présente une unité d'exécution de fonctions blockchain, et où les fonctions blockchain comprennent : au moins un mécanisme consensuel, un stockage de base de données et une fonction de messagerie P2P.

5. Procédé selon l'une des revendications précédentes, où ledit au moins un nœud IOBN (310a, 310b, 410, 510) présente un mécanisme de cryptage, un mécanisme cryptographique et/ou des interfaces configurées pour un accès par des systèmes du MNO.

6. Procédé selon l'une des revendications précédentes, où l'IOBN est configuré pour permettre des micropaiements entre plusieurs MNO (400, 500), MNO virtuels, tiers et/ou clients terminaux.

7. Procédé selon l'une des revendications précédentes, où des fonctions de gestion de l'IOBN sont partiellement ou intégralement exécutées dans un nuage public et/ou où des interfaces à l'IOBN sont configurées pour permettre un accès public.

8. Procédé selon l'une des revendications précédentes, où l'IOBN est configuré pour gérer dynamiquement la largeur de bande du réseau dédié.

9. Procédé selon l'une des revendications précédentes, où l'IOBN est configuré pour gérer dynamiquement la latence du réseau dédié.

10. Réseau de chaînes de blocs inter-opérateurs IOBN, pour l'établissement et l'exploitation d'un réseau dédié, avec au moins quatre nœuds IOBN (310a, 310b, 410, 510), ledit IOBN étant configuré pour exécuter un procédé selon l'une des revendications 1 à 10.

11. IOBN selon la revendication 10, ledit IOBN étant configuré pour préparer une base de données de sociétés, d'établissements et/ou transnationalement globalement répartie, une hiérarchie de base de données et/ou une structure graphique de bases de données réparties, prévues pour gérer et commander des appareils, des fonctions et/ou une infrastructure d'un réseau de téléphonie mobile.

12. Nœud de réseau de chaînes de blocs inter-opérateurs IOBN (310a, 310b, 410, 510) pour l'établissement et l'exploitation d'un réseau dédié, ledit nœud IOBN (310a, 310b, 410, 510) étant configuré pour former avec au moins un autre nœud IOBN (310a, 310b, 410, 510) un IOBN selon la revendication 10 ou la revendication 11.
